# EUROPEAN PATENT SPECIFICATION

(11) **EP 0 541 517 B1**
(45) Date of publication and mention of the grant of the patent: **11.06.1997**
(21) Application number: 93200144.9
(22) Date of filing: 22.01.1986
(51) Int. Cl.: A01J 7/00, A01K 1/12

(54) **A device for milking animals**
Vorrichtung zum Melken von Tieren
Dispositif de traite d'animaux

(30) Priority: 28.01.1985 NL 8500224; 28.01.1985 NL 8500222; 28.01.1985 NL 8500223
(43) Date of publication of application: 12.05.1993
(62) Divisional of application: 89103332.6
(73) Proprietor: C. van der Lely N.V., NL-3155 PD Maasland (NL)
(72) Inventor: van der Lely, Cornelis, CH-6300 Zug (CH)
(74) Representative: Mulder, Herman

(56) References cited:
- EP-A- 0 091 892
- US-A- 4 010 714

## Description

The invention relates to a device for milking animals, such as cows, comprising a milking parlour and a milking machine with a milking cluster and supporting means therefore, the device further being provided with sensor means including two sensor members being arranged near opposite longitudinal sides of the milking parlour and capable to be brought into contact with an animal to determine the lateral position of the animal.

Such a device is known from US-A-4,010,714. In the device described in said document the sensor members are fixed with respect to the milking parlour. These sensor members comprise inflation means with the aid of which an animal can be brought into a fixed position in the milking parlour. It is an object of the invention to connect the teat cups of the milking cluster to the teats of an animal not-withstanding the animal is permitted to move in the lateral direction of the milking parlour.

To that end, the device according to the invention is characterized in that the sensor means are coupled to the supporting means for the milking cluster to allow the milking cluster to follow movements of the animal in the lateral direction of the milking parlour and in that each sensor member is pivotable about a respective shaft, the sensor means further being provided with a connecting rod which is movably connected with both sensor members, whereby the connection points of the connecting rod with the sensor members are situated at opposite sides of a plane through the shafts. So, the positioning means are provided with a rod brought in such a way between the sensor members that these sensor members can move together and synchroneously in- and outwards, while, when the sensor members are moved together in one lateral direction, the milking cluster is moved accordingly, following movements of the animal in said lateral direction. Further, in accordance with the invention a spring may be provided to force the sensor members to move inwardly with respect to the milking parlour. The sensor members may be provided with a shoe which can bear against the animal's side.

In a specific embodiment, the supporting means are provided with a frame which is movably connected with the sensor members. Preferably, a spring as indicated above is provided between each of the sensor members and the frame. The movability of the frame relative to the milking parlour may further be realized by means of a parallelogram construction extending in a horizontal plane.

For a better understanding of the invention, an embodiment of a device for milking animals will now be described, by way of example, with reference to the drawing.
Figure 1 is a plan view of the device;
Figure 2 is a side elevational view of the device, partly in cross-section;
Figure 3 is a cross-sectional view along the line III-III of Figure 2;
Figure 4 shows a set-up of the device;
Figure 5 shows a number of details of the device, shown in plan view and
Figure 6 shows details by means of a cross-sectional view along the line VI-VI of Figure 5.

The Figures are shown schematically, corresponding components having been given the same reference numerals.

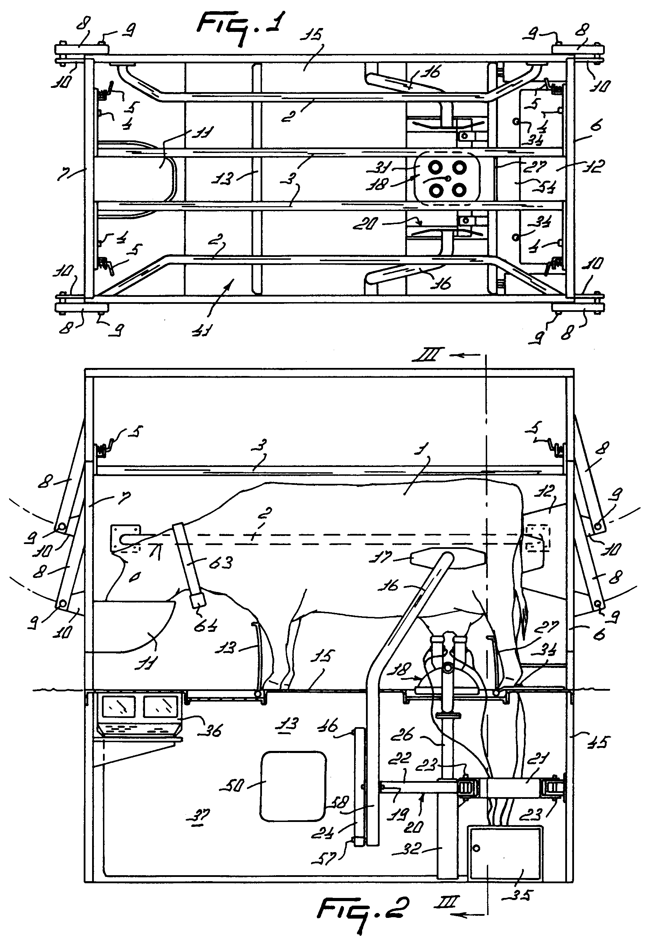

Figures 1, 2 and 3 show a milking parlour in which a cow 1 may be present. The milking parlour is provided on either side with guide rails 2 and with guide rails 3, which may extend over the cow. The lateral guide rails 2 are fastened to the milking parlour wall. The upper guide rails 3 are adjustable for height in that they can swivel around the hinge points 4 and can be locked in different positions by means of blocking devices.

In addition, the milking parlour has an entrance door 6 and an exit door 7. To open the doors, swivel arms 8 are provided which are connected capable of hinging to the frame or the wall of the device through hinge points 9 and also capable of swivelling to supports 10 fastened to the doors 6, 7. The doors 6 and 7 can be operated individually and automatically, for example hydraulically or pneumatically, through control means not further shown in the Figures 1, 2 and 3.

A manger 11 is fastened to the exit door 7, in which doses of fodder, for example concentrated fodder, can be applied through means not further shown.

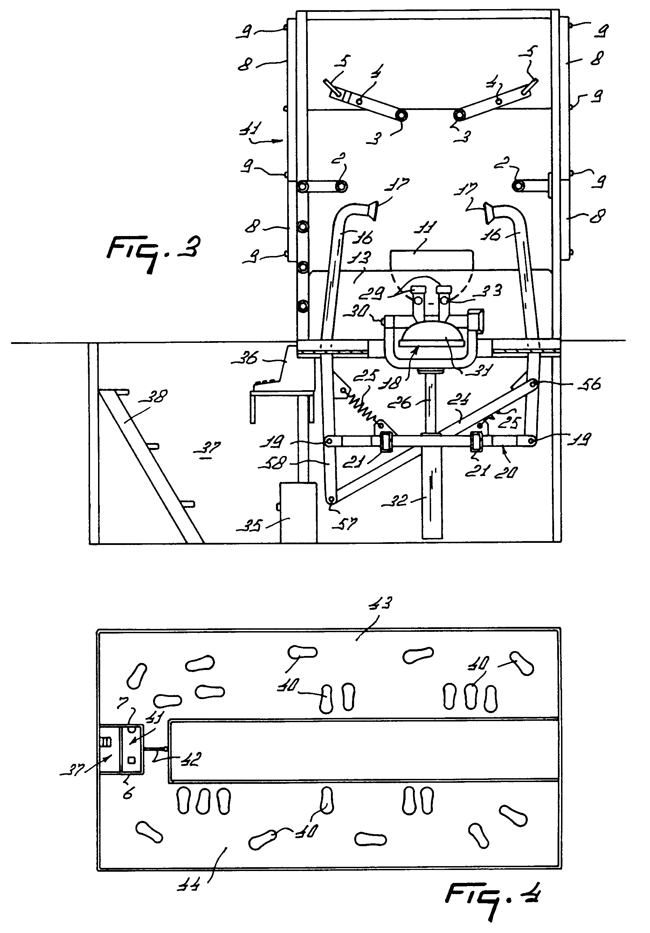

The entrance door 6 has a buffer 12, which - as is shown in Figure 2 - can bear against the posterior of the cow. Because of the presence of this buffer, the animal cannot move to the rear or the possibility to move to the rear can be limited. In this way the animal can be positioned in the longitudinal direction.

Figure 2 shows a flap 13, which is swivable around hinge pin 14 and is shown in its raised position. The flap 13 can be swivelled to a substantially horizontal position, the flap 13 then being flush with the floor 15 of the milking parlour. When the animal enters the milking parlour, flap 13 will be in the position shown, and the animal will move its forelegs up to or near the flap 13, so as to be able ot reach the manger 11.

Additionally, the device has two sensor members 16, both provided with a shoe 17, which can bear against the animal's side. The mutual distance between the shoes 17 can be varied, but by means of a mechanism still further to be described in the sequel, the milking cluster 18 will always be in a central position below the two shoes 17. To that end, the two sensor members 16 are provided, each capable of hinging around a horizontal shaft 19, to a frame 20, which frame 20 can be moved laterally relative to the milking parlour because of the fact that it is supported by two parallel beams 21, each beam 21 being connected by means of one end and capable of hinging around a vertical shaft 22 to the frame 20 and by means of its other end, capable of hinging around vertical shaft 23 to the frame of the device. Thus a parallelogram structure is obtained. The mutual motion of the sensor members 16 is coupled such that their motion can only proceed symmetrically relative to the frame 20. For that purpose a connecting rod 24 is provided, one end 56 of which is connected capable of hinging to one sensor member, more specifically remote from hinge point 19, and by means of its other end 57 this rod 24 is connected to an extension 58 of the other sensor member at substantially the same distance from hinge point 19. So as to pull the two sensor members 16 slightly towards each other, a tension spring 25 is provided. The support 26 for the milking cluster is also connected to the frame 20, so that it can also be moved laterally by swivelling of the beams 21.

The tension spring 25 moves the shoes 17 of the sensor members 16 to each other in such a way that the mutual distance between the shoes 17 is less than the width of an animal entering the milking parlour. As a result thereof, the shoes will bear on both sides against the animal, the frame 20 always being moved to a position straight under the animal, as a result of which the milking cluster support 26 will always be central under the animal. Even if the animal moves during milking in a lateral direction, the milking cluster will follow this movement.

The device can also include means for moving the sensor members 16 mutually from each other when the animal enters and/or leaves the milking parlour.

The device furthermore includes a flap 27, which is swivable around a horizontal hinge pin 28, which extends substantially in the lateral direction relative to the milking parlour. The flap 27 will be in its horizontal position when it forms part of the floor 15 of the milking parlour, when the animal enters the milking parlour. Thereafter the flap 27 can be swivel led in the vertical direction, thus preventing the hindlegs of the animal, which are then up against or near the flap 27, from being capable of forward movement. When one or both hind legs of the animal would originally stand on the flap, this leg or both hindlegs will be compelled to move to the rear, which improves the accessibility of the udder. Because of the presence of guide rails 3 above the animal, the animal is prevented from trying to step over the flaps 13 or 27.

In Figure 1 four teat cups 29 of the milking cluster 18 are shown in plan view. As will be clear from the Figures 2 and 3, the teat cups 29 are connected such to the support 26 by means of the horizontal hinge pin 30 that the cups of the milking cluster can rotate through 180°, whereafter they face down, cleaning means, such as a bowl-shaped basin 31 also having been rotated through 180° so that this basin has its open side face upward. The bowl-shaped basin 31 may be used for washing and cleaning the udder.

The milking cluster 18 and the bowl-shaped basin 31 can move with their support 26 in the vertical direction, because the support 26 can move telescopically in the member 32 connected to the frame 20.

Figure 2 furthermore shows a number of sensors, more specifically sensors 33 on the teat cups 29, which sensors can detect whether the connection of the teat cup to the teat of the udder is effected correctly. Sensors 34 can detect whether the hindlegs of the animal are in a correct position.

In addition, a control unit denoted by reference numeral 35 and a microprocessor 36 are arranged below the milking parlour floor level.

As is shown in Figure 3, a control room 37 is also provided below the floor level of the milking parlour and a stair 38 is shown which gives access to the control room.

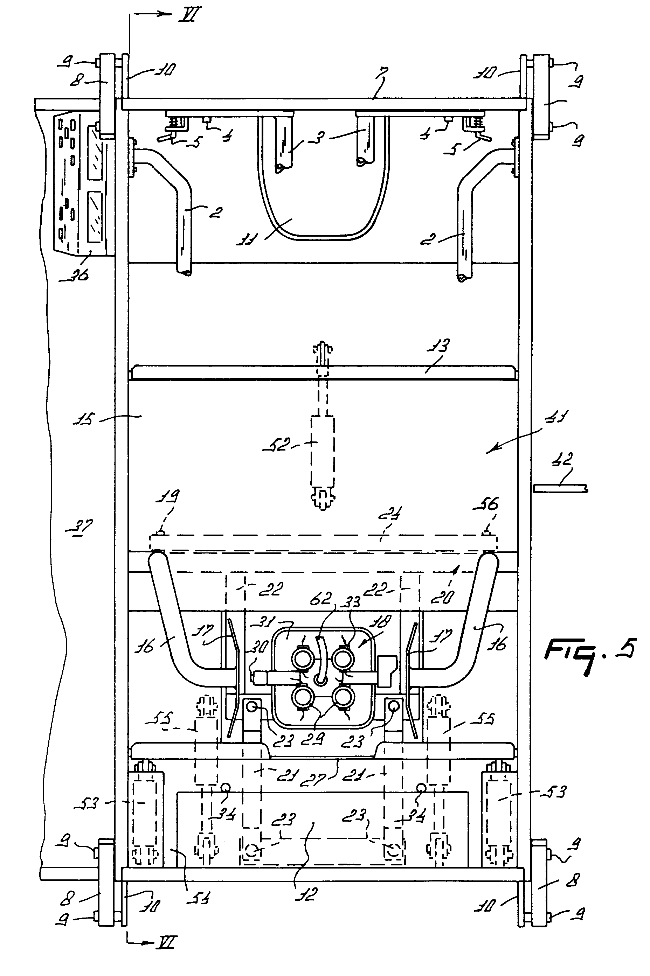

Figure 4 shows schematically a stable in which a number of animals 40 move freely. The milking parlour 41 is incorporated in the stable and furthermore a door 42 is present, so that the stable is divided into two portion 43 and 44. Door 42 is freely swivable in one direction, so that the animals 40 can move through this door from portion 44 to portion 43 of the stable, but not vice versa. The animals can only move from portion 43 to portion 44 of the stable through the milking parlour 41, which, for that purpose has an entrance door 6 and an exit door 7.

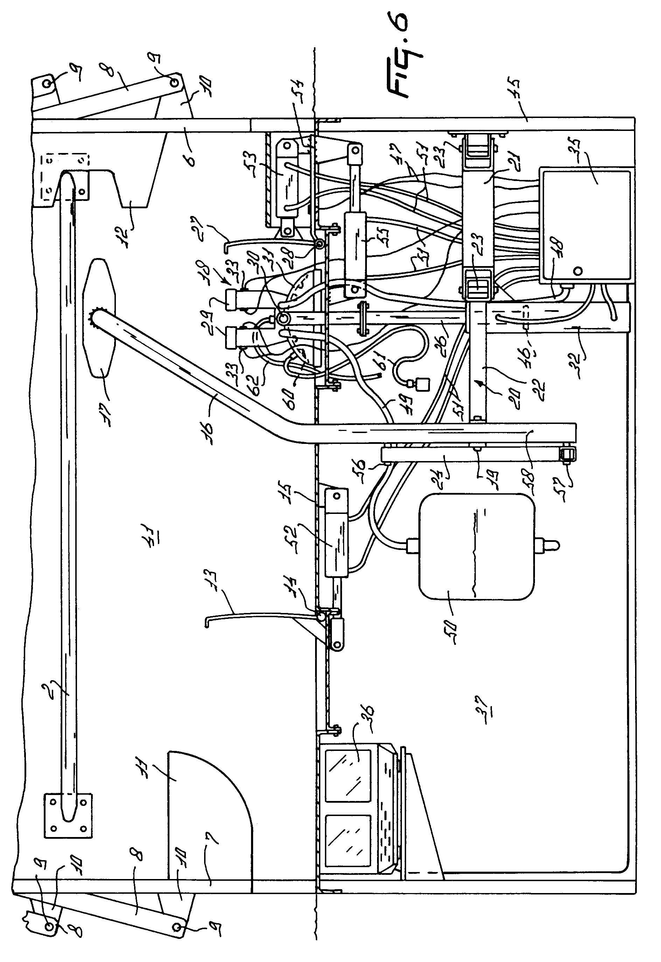

Figures 5 and 6 are cross-sectional views of a portion of the device for milking animals, which cross-sectional views show more details. The device includes guide rails 3 extending on both sides of the animal when the animal is in the milking parlour. In addition, in Figure 5 portions of guide rails 3 are shown, which guide rails may extend over the animal. The device furthermore has an entrance door 6 and an exit door 7, the entrance door 6 having a buffer 12 against which the posterior of the animal can bear, Door 7 is provided with a manger 11.

A frame 20 is connected in such a way to a wall 45 by means of bars 21 that the frame 22 is capable of moving substantially in the lateral direction. To that end, two bars 21 are provided which are mutually in parallel and are each connected by means of one end to the wall 45, capable of hinging around a vertical axis, and by means of their other ends through a vertical hinge pin to the frame 22, so that a parallelogram construction is obtained. The sensor members 16 are fastened to the frame 22 and the support 26 is fastened through member 32. Member 32 constitutes a cylinder in which a piston 46 connected to a support 26 can move with the object of moving the milking cluster 18 in the vertical direction.

Furthermore, the frame 22 supports two sensor members 16, which are both swivable, the connection being intercoupled by means of connecting rod 24. As has already been described in the foregoing, the sensor members 16 move the frame 22 such, that the milking cluster 18 is always in a central position under the two shoes 17 of sensor members 16. The milking cluster 18 which can move, by travelling in the vertical direction, to below the floor level of the milking parlour because a support 26 descends in element 32, has sensors 33 which can detect whether the teat cups 29 have been connected correctly to the teats of the udders. These sensors 33, as are also sensors 34 for detecting the position of the hindlegs of the animal, are connected by means of wires 47 to the control unit 35. By means of conduit 48, this control unit 35 is conncted to the milking cluster 18, for producing the vacuum for the milking operation. The milk can flow to storage container 50 through conduit 49.

In addition, control unit 35 provides for the motions of the different portions of the device. To that end, control unit 35 is connected through hydraulic conduits or air conduits 51 to a hydraulic or pneumatic cylinder 52 for operating flap 13 and to a hydraulic or pneumatic cylinder 53 for operating flap 27. Also the height adjustment of support 26 of milking cluster 18 may be effected hydraulically or pneumatically.

Additionally, the device includes a floor portion 54 which is capable of sliding in the longitudinal direction relative to the milking parlour. By means of hinge 28 this floor portion 54 is connected to flap 27 and can be moved by means of a pneumatic or hydraulic cylinder 55. By moving the floor portion 54 rearwardly, the hindlegs of the animal can be moved to the rear, so that the udder is accessible to an improved degree. In this situation, the buffer 12 can bear against the posterior of the animal.

As is shown in Figure 6, the milking cluster 18 can swivel around horizontal shaft 30, so that the bowl-shaped basin 31 is directed upwardly. In this position of basin 31, cleaning of the animal's udder can be effected, for which purpose spray nozzles 60 and a liquid fed-forward through conduit 61 can be sprayed against the udder. This liquid may be a disinfectant, a rinsing agent in the form of warm water or any other liquid suitable for washing, rinsing, disinfecting or otherwise cleaning the udder. The bowl-shaped basin 31 has in its centre a discharge conduit 62 through which the used-up liquid can be discharged and through which optionally warm air can be blown to the udder for drying it.

Figures 5 and 6 show, also schematically, a micro-processor or computer 36 which can control the device. This control may relate to connecting the milking cluster to the udder, decoupling the milking cluster from the udder, rinsing, cleaning or disinfecting the udder, positioning of the animal, metering of fodder, etc. Then, the animal 1 may be provided with a collar 63 to which means 64 for identifying the animal are attached, so that using a sensor it can be detected which animal is present in the milking parlour, this information being used by the micro-processor 36 for controlling the device.

Further sensors may alternatively be provided, for example sensors for determining the temperature of the milk, which data may be important for controlling the device. The relevant data of each animal can be stored in the memory of the micro-processor 36 and are thus available in any combination for a person operating the device.

## Claims

1. A device for milking animals, such as cows, comprising a milking parlour and a milking machine with a milking cluster (18) and supporting means (20, 26) therefore, the device further being provided with sensor means including two sensor members (16) being arranged near opposite longitudinal sides of the milking parlour and capable to be brought into contact with an animal (1) to determine the lateral position of the animal (1), characterized in that the sensor means are coupled to the supporting means (20, 26) for the milking cluster (18) to allow the milking cluster (18) to follow movements of the animal (1) in the lateral direction of the milking parlour and in that each sensor member (16) is pivotable about a respective shaft (19), the sensor means further being provided with a connecting rod (24) which is movably connected with both sensor members (16), whereby the connection points of the connecting rod (24) with the sensor members (16) are situated at opposite sides of a plane through the shafts (19).

2. A device as claimed in claim 1, characterized in that a spring (25) is provided to force the sensor members (16) to move inwardly with respect to the milking parlour.

3. A device as claimed in claim 1 or 2, characterized in that the supporting means are provided with a frame (20) which is movably connected with the sensor members (16).

4. A device as claimed in claim 3, characterized in that between each of the sensor members (16) and the frame (20) a spring (25) is provided.

5. A device as claimed in claim 3 or 4, characterized in that the frame (20) is movable relative to the milking parlour by means of a parallelogram construction (21, 23) extending in a horizontal plane.

6. A device as claimed in any one of the preceding claims, characterized in that the sensor member (16) is provided with a shoe (17) which can bear against the animal's side.

## Patentansprüche

1. Vorrichtung zum Melken von Tieren, wie z. B. von Kühen, die einen Melkstand und eine Melkmaschine mit einem Melkgeschirr (18) und einer Halterung (20, 26) hierfür sowie ferner eine Sensoreinrichtung mit zwei Sensorelementen (16) aufweist, die nahe gegenüberliegenden Längsseiten des Melkstandes angeordnet und in Kontakt mit einem Tier (1) zu bringen sind, um die seitliche Position des Tieres (1) zu bestimmen,
dadurch gekennzeichnet, daß die Sensoreinrichtung mit der Halterung (20, 26) für das Melkgeschirr (18) verbunden ist, so daß das Melkgeschirr (18) Bewegungen des Tieres (1) in Seitwärtsrichtung des Melkstandes zu folgen vermag, und daß jedes Sensorelement (16) um eine zugehörige Achse (19) schwenkbar ist, wobei die Sensoreinrichtung ferner eine Verbindungsstange (24) aufweist, die mit beiden Sensorelementen (16) beweglich verbunden ist, und wobei die Verbindungsstellen der Verbindungsstange (24) mit den Sensorelementen (16) auf einander gegenüberliegenden Seiten einer durch die Achsen (19) verlaufenden Ebene liegen.

2. Vorrichtung nach Anspruch 1,
dadurch gekennzeichnet, daß eine Feder (25) vorhanden ist, die die Sensorelemente (16), bezogen auf den Melkstand, in Richtung nach innen belastet.

3. Vorrichtung nach Anspruch 1 oder 2,
dadurch gekennzeichnet, daß die Halterung ein Gestell (20) aufweist, das mit den Sensorelementen (16) beweglich verbunden ist.

4. Vorrichtung nach Anspruch 3,
dadurch gekennzeichnet, daß zwischen jedem Sensorelement (16) und dem Gestell (20) jeweils eine Feder (25) angeordnet ist.

5. Vorrichtung nach Anspruch 3 oder 4,
dadurch gekennzeichnet, daß das Gestell (20) in bezug auf den Melkstand mittels einer Parallelogramm-Konstruktion (21, 23) zu bewegen ist, die sich in einer horizontalen Ebene erstreckt.

6. Vorrichtung nach einem der vorhergehenden Ansprüche,
dadurch gekennzeichnet, daß das Sensorelement (16) ein Druckstück (17) aufweist, das gegen die Flanke des Tieres zu drücken ist.

## Revendications

1. Dispositif de traite d'animaux, tels que des vaches, comprenant une stalle de traite et une machine à traire avec un groupe de traite (18) et des moyens du support (20, 26) pour ce groupe, le dispositif étant muni en outre de moyens capteurs comportant deux organes capteurs (16) disposés près des côtés longitudinaux opposés de la stalle de traite et pouvant être amenés en contact avec un animal (1) pour déterminer la position latérale de l'animal (1),
**caractérisé** en ce que les moyens capteurs sont couplés aux moyens de support (20, 26) du groupe de traite (18) pour permettre au groupe de traite (18) d'accompagner les mouvements de l'animal (1) dans le sens latéral de la stalle de traite, et en ce que chaque organe capteur (16) est pivotant autour d'un axe (19) respectif, les moyens capteurs étant munis en outre d'une barre de liaison (24) qui est reliée de manière mobile aux deux organes capteurs (16), les points de jonction de la barre de liaison (24) avec les organes capteurs(16) étant situés de part et d'autre d'un plan contenant les axes (19).

2. Dispositif selon la revendication 1, caractérisé en ce qu'un ressort (25) est prévu pour forcer les organes capteurs (16) à aller vers l'intérieur par rapport à la stalle de traite.

3. Dispositif selon la revendication 1 ou 2, caractérisé en ce que les moyens de support sont munis d'un cadre (20) qui est relié de manière mobile aux organes capteurs (16).

4. Dispositif selon la revendication 3, caractérisé en ce qu'un ressort (25) est prévu entre chacun des organes capteurs (16) et le cadre (20).

5. Dispositif selon la revendication 3 ou 4, caractérisé en ce que le cadre (20) est mobile par rapport à la stalle de traite au moyen d'une structure (21, 23) en parallélogramme, s'étendant dans un plan horizontal.

6. Dispositif selon l'une quelconque des revendications précédentes, caractérisé en ce que l'organe capteur (16)est muni d'un sabot (17) pouvant porter contre le flanc de l'animal.
